# EUROPÄISCHE PATENTSCHRIFT

(11) **EP 3 295 913 B1**
(45) Veröffentlichungstag und Bekanntmachung des Hinweises auf die Patenterteilung: **17.04.2019**
(21) Anmeldenummer: 17191227.2
(22) Anmeldetag: 15.09.2017
(51) Int. Cl.: A61G 13/02, A61G 13/08, A61G 13/12

(54) **PATIENTENLAGERUNGSPLATTE MIT ZUBEHÖRTEIL**
PATIENT SUPPORT SURFACE WITH ACCESSORY
SUPPORT POUR PATIENT À PLATEAU POURVU D'ACCESSOIRE

(30) Priorität: 16.09.2016 DE 102016217803
(43) Veröffentlichungstag der Anmeldung: 21.03.2018
(73) Patentinhaber: TRUMPF Medizin Systeme GmbH + Co. KG, 07318 Saalfeld (DE)
(72) Erfinder: FIEDLER, Kevin, 07407 Uhlstädt-Kirchhasel (DE); KUCHENBECKER, Arnd, 07318 Saalfeld (DE); LUDWIG, Carmen, 07318 Saalfeld (DE)
(74) Vertreter: Prüfer & Partner mbB Patentanwälte · Rechtsanwälte

(56) Entgegenhaltungen:
- WO-A1-02/055001
- US-B2- 6 678 908
- US-B2- 7 818 839

## Beschreibung

Die Erfindung betrifft eine Patientenlagerungsplatte mit einem Zubehörteil, insbesondere mit einem Zubehörteil, das im Bereich eines Gelenks an der Patientenlagerungsplatte angebracht ist. Eine solche Patientenlagerungsplatte ist aus WO02055001 bekannt.

Bislang sind Patientenlagerungsplatten bekannt, an denen Befestigungsschienen als Zubehörteile, an denen medizinische Geräte oder Hilfsmittel befestigt werden können, seitlich und/oder an den Stirnseiten angebracht sind. Diese Befestigungsschienen sind üblicherweise mit Durchgangsbohrungen mit Senkungen versehen, durch die die Schienen an einem Rahmen der Patientenlagerungsplatte verschraubt werden. Dabei entstehen jedoch zwischen Schraubenköpfen und den Senkungen Spalte, die die hygienischen Verhältnisse verschlechtern. Daher werden die Durchgangsbohrungen mit Senkungen fallweise mit Abdeckkappen verschlossen. Hierbei besteht jedoch ein Mehraufwand und es besteht außerdem die Gefahr, dass die Abdeckkappen abfallen.

Das Dokument US 6,678,908 B2 offenbart zusätzliche Auflageelemente für Patientenlagerungsplatten, um die Auflagefläche für übergewichtige Patienten zu verbreitern. Diese zusätzlichen Auflageelemente umgreifen eine Patientenlagerungsfläche der Patientenlagerungsplatte und können auf die seitlichen Befestigungsschienen der Patientenlagerungsplatte aufgesteckt werden. An diesen zusätzlichen Auflageelementen sind ebenfalls seitlich Befestigungsschienen vorgesehen, um die medizinischen Geräte oder Hilfsmittel anzubringen. Diese seitlichen Befestigungsschienen sind von innen über Befestigungsschrauben an den zusätzlichen Auflageelementen befestigt, so dass außen an den Befestigungsschienen eine glatte homogene Oberfläche möglich ist, so dass hygienische Verhältnisse nicht verschlechtert werden und auch keine zusätzlichen Abdeckkappen erforderlich sind.

Eine solche Befestigung der seitlichen Befestigungsschienen ist jedoch im Bereich von Gelenken zwischen Plattensegmenten der Patientenlagerungsplatte auf Grund der konstruktiven Ausführung der Gelenke nur sehr aufwändig möglich und für eine nachträgliche Demontage der Befestigungsschiene ist ein Zerlegen des Gelenks erforderlich.

Der Erfindung liegt also die Aufgabe zugrunde, eine Patientenlagerungsplatte so zu verbessern, dass die oben genannten Probleme behoben werden, und den Aufbau der Gelenke der Patientenlagerungsplatte zu optimieren.

Die Aufgabe wird durch eine Patientenlagerungsplatte gemäß Anspruch 1 gelöst. Vorteilhafte Weiterentwicklungen sind Gegenstand der Unteransprüche.

Die Erfindung wird nun anhand eines Ausführungsbeispiels unter Bezugnahme auf die beigefügten Zeichnungen erläutert.

Insbesondere zeigen:
- Fig. 1: einen Operationstisch mit einer Patientenlagerungsplatte mit Gelenken und einer Befestigungsschiene an einem der Gelenke;
- Fig. 2: eine Schnittansicht eines der Gelenke der Patientenlagerungsplatte mit der Befestigungsschiene und mit einer Antriebseinrichtung;
- Fig. 3: eine Ansicht des Gelenks von Fig. 2 ohne Gehäuse der Antriebseinrichtung, mit einem Antriebselement, und mit einem optionalen weiteren Kopplungselement;
- Fig. 4: eine Schnittansicht des Gelenks mit einem Befestigungselement für das Zubehörteil;
- Fig. 5: eine Schnittansicht des Gelenks mit Formschlusselementen zwischen dem optionalen weiteren Kopplungselement und dem Antriebselement;
- Fig. 6a bis 6c: verschiedene Abstandshalter für das Zubehörteil;
- Fig. 7: eine Schnittansicht des Gelenks mit einer weiteren Ausgestaltung einer Anbringung des Befestigungselements; und
- Fig. 8: eine Schnittansicht des Gelenks mit einer anderen weiteren Ausgestaltung der Anbringung des Befestigungselements.

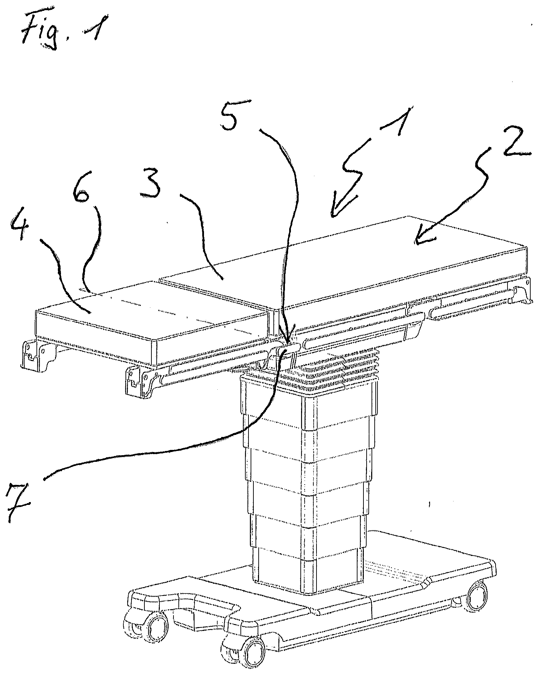

Fig. 1 zeigt einen Operationstisch 1 mit einer Patientenlagerungsplatte 2, die eine erste Patientenlagerungskomponente 3 und eine zweite Patientenlagerungskomponente 4 aufweist. Die erste Patientenlagerungskomponente 3 ist mit der zweiten Patientenlagerungskomponente 4 über ein Gelenk 5 verschwenkbar gekoppelt. Das Gelenk 5 ist an der ersten Patientenlagerungskomponente 3 vorgesehen und die zweite Patientenlagerungskomponente 4 ist an das Gelenk 5 koppelbar. Alternativ ist das Gelenk 5 an der zweiten Patientenlagerungskomponente 4 vorgesehen und die erste Patientenlagerungskomponente 3 ist an das Gelenk 5 koppelbar. Das Gelenk 5 weist eine Schwenkachse 6 auf, um die die erste Patientenlagerungskomponente 3 und die zweite Patientenlagerungskomponente 4 zueinander zu verschwenken.

An dem Gelenk 5 ist ferner eine Befestigungsschiene 7 als ein Zubehörteil angebracht.

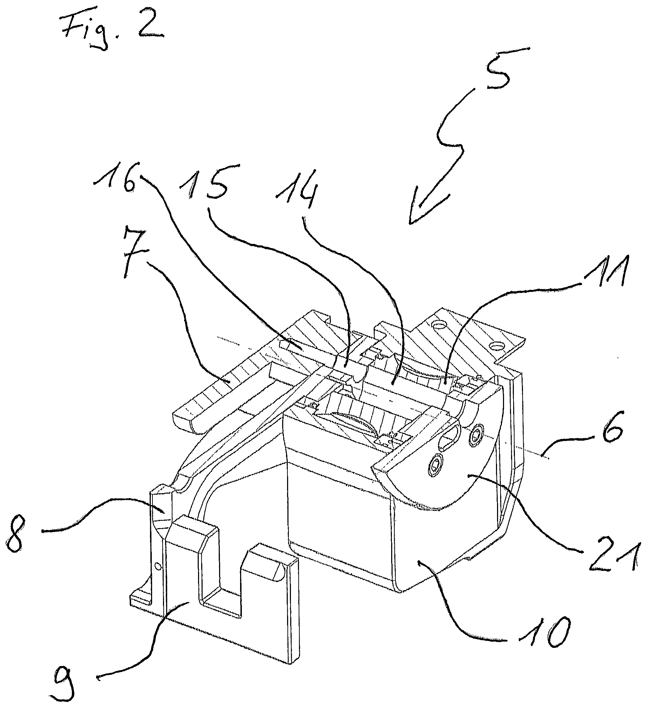

Fig. 2 zeigt eine Schnittansicht des Gelenks 5. Das Gelenk 5 weist ein Kopplungselement 8 auf. Das Kopplungselement 8 weist eine Koppeleinrichtung 9 auf, so dass die erste an der zweiten Patientenlagerungskomponente 3, 4 oder die zweite an der ersten Patientenlagerungskomponente 4, 3 über das Kopplungselement 8 koppelbar ist.

Ferner ist das Gelenk 5 mit der Befestigungsschiene 7 und mit einer Antriebseinrichtung 10 versehen gezeigt. Die Antriebseinrichtung 10 weist ein später beschriebenes Antriebselement 11 auf.

Das Antriebselement 11 ist in Richtung der Schwenkachse 6 am Kopplungselement 8 angeordnet befestigbar. Dazu ist es mit einer ersten durchgehenden Öffnung 14 versehen. Das Antriebselement 11 ist nicht zwingend auf der Schwenkachse 6 angeordnet. Eine Position der ersten durchgehenden Öffnung 14 ist so gewählt, dass sie auch im eingebauten Zustand des Gelenks 5 in dem Operationstisch 1 zugänglich ist. Das Kopplungselement 8 ist mit einer zweiten durchgehenden Öffnung 15 versehen. Eine in Fig. 2 gezeigte Scheibe 21 kann optional vorhanden sein ist aber nicht zwingend erforderlich.

An dem Gelenk 5 ist außerdem, wie nachstehend beschrieben, die Befestigungsschiene 7 angebracht. Die Befestigungsschiene 7 ist mit einer Aufnahme 16 versehen. Die Aufnahme 16 ist, wie hiergezeigt, nicht durch die Befestigungsschiene durchgehend, so dass die Befestigungsschiene eine dem Antriebselement 11 abgewandte glatte, homogene Fläche aufweist.

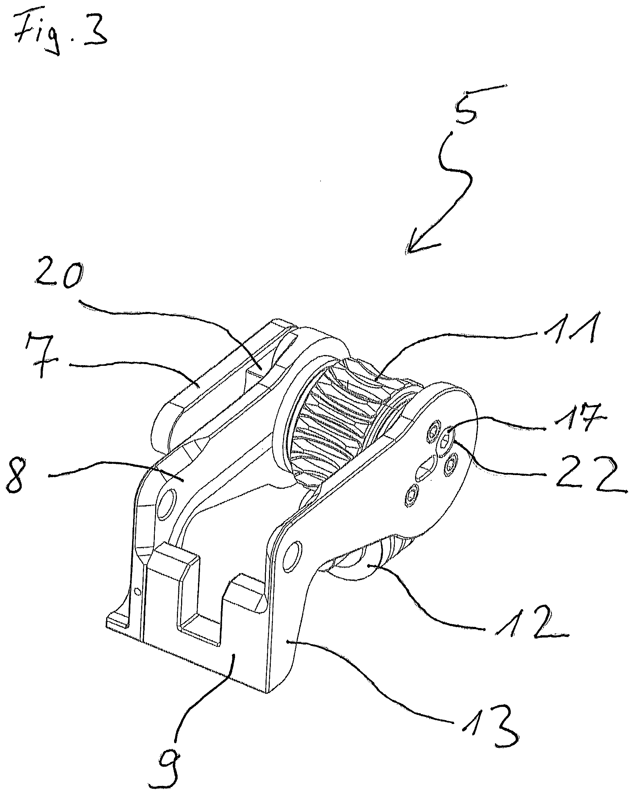

In Fig. 3 ist eine Ansicht des Gelenks 5 ohne ein Gehäuse der Antriebseinrichtung 10 gezeigt. Daher ist zu sehen, dass die Antriebseinrichtung 10 das Antriebselement 11 in Form eines Schneckenrads aufweist. Ferner ist die Antriebseinrichtung 10 mit einer Antriebsschnecke 12 versehen. Die Antriebseinrichtung 10 ist hier also hier ein Schneckengetriebe, kann alternativ aber auch beispielsweise ein Hebelgetriebe sein, das mittels eines elektrischen Linearantriebs oder eines Pneumatik- oder Hydraulikzylinder angetrieben wird. Das Antriebselement 11 ist dann als ein Antriebshebel ausgeführt.

Das Gelenk 5 ist, wie in Fig. 3 zu sehen, mit einem optionalen weiteren Kopplungselement 13 versehen. Das weitere Kopplungselement 13 ist bezüglich des Antriebselements 11 dem Kopplungselement 8 gegenüber gelegen. Ferner weist das weitere Kopplungselement 13 eine Öffnung 22, hier eine Durchgangsbohrung und eine zylindrische Senkung, zum Einführen eines später beschriebenen ersten Befestigungselements 17 auf. Das weitere Kopplungselement 13 ist über die Koppeleinrichtung 9 mit dem Kopplungselement 8 verbunden. Dadurch kann eine höhere Steifigkeit und Belastungsfähigkeit des Gelenks 5 erreicht werden.

Ferner aus Fig. 3 ersichtlich, dass zwischen der Befestigungsschiene 7 und dem Kopplungselement 8 ein Abstandshalter 20 vorgesehen ist.

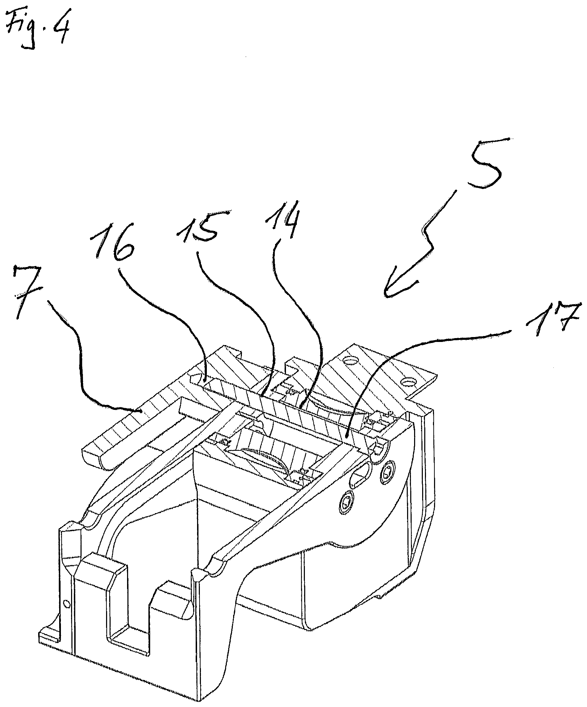

Fig. 4 zeigt eine Schnittansicht des Gelenks 5 mit dem ersten Befestigungselement 17 der Befestigungsschiene 7. Das erste Befestigungselement 17 ist hier eine Schraube, kann aber auch ein anderes lösbares Befestigungselement, beispielsweise über das Prinzip eines Bajonettverschlusses, sein.

Zur Montage des Gelenks 5 wird das erste Befestigungselement 17 von der dem Kopplungselement 8 gegenüberliegenden Seite des Antriebselements 11 durch die erste durchgehende Öffnung 14 des Antriebselements 11 und die zweite durchgehende Öffnung 15 des Kopplungselements 8 eingeführt und in der Aufnahme 16, die hier ein Muttergewinde aufweist, mit der lösbaren Befestigungsschiene 7 verbunden, hier also verschraubt. Dadurch ist es möglich, die Befestigungsschiene 7, beispielsweise für einen Ersatz, einfach zu entfernen, ohne dass es notwendig ist, das Gelenk 5 vollständig zu zerlegen. Alternativ ist möglich, mehrere erste Befestigungselemente 17 zu verwenden. Sofern nur ein Befestigungselement 17 verwendet wird, ist es zweckmäßig, die Befestigungsschiene über einen Formschluss mit dem Kopplungselement 8 zu verbinden.

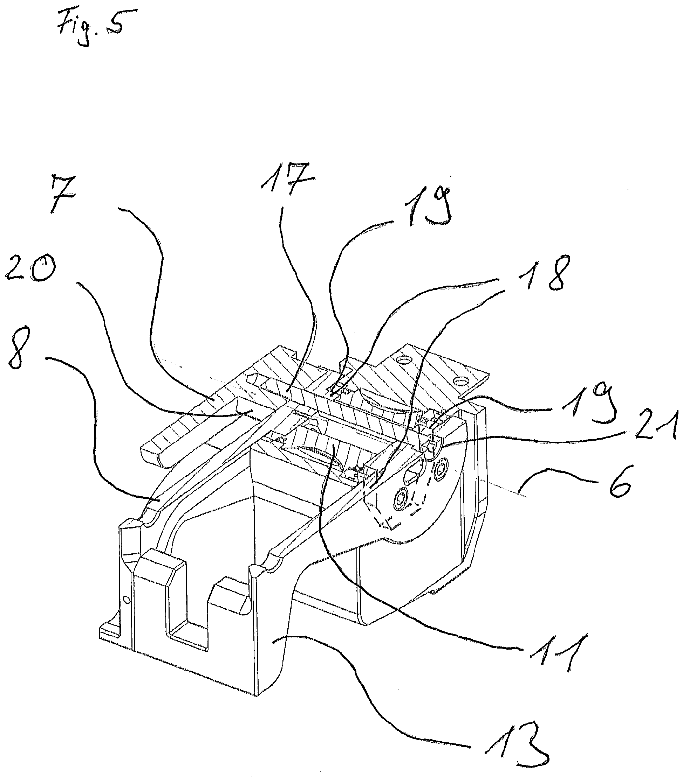

Fig. 5 zeigt eine Schnittansicht des Gelenks 5. Hier ist ein erstes Formschlusselement 18 an dem optionalen weiteren Kopplungselement 13 und ein zweites Formschlusselement 19 an dem Antriebselement 11 dargestellt. Diese mit Strichlinien dargestellten Formschlusselemente 18, 19 bilden einen Formschluss zwischen dem optionalen weiteren Kopplungselement 13 und dem Antriebselement 11. Hier, aus Gründen der Übersichtlichkeit nicht zeichnerisch dargestellt, ist auch ein Formschluss zwischen dem Kopplungselement 8 mit einem weiteren ersten Formschlusselement 18 und dem Antriebselement 11 mit einem weiteren zweiten Formschlusselement 19 möglich. Der Formschluss ist also entweder zwischen dem Antriebselement 11 und dem Kopplungselement 8 und/oder zwischen dem Antriebselement 11 und dem weiteren Kopplungselement 13 vorgesehen. Die Formschlusselemente 18, 19 sind zusätzlich zu dem ersten Befestigungselement 17 für eine formschlüssigen Verbindung des Antriebselements 11 mit dem Kopplungselement 8 oder mit dem weiteren Kopplungselement 13 vorgesehen. Diese formschlüssigen Verbindungen können annähernd spielfrei ausgeführt werden und können ein großes Drehmoment übertragen.

Die ersten Formschlusselemente 18 sind an dem Kopplungselement 8 oder dem weiteren Kopplungselement 13 durch eine Erhöhung in Richtung der Schwenkachse 6 ausgebildet. Die zweiten Formschlusselemente 19 sind jeweils durch eine Vertiefung an dem Antriebselement 11 ausgebildet. Das erste und zweite Formschlusselement 18, 19 sind zueinander komplementär und sie sind so ausgebildet, dass ein Drehmoment übertragen werden kann. Hier weisen die Formschlusselemente 18, 19 in Richtung der Schwenkachse 6 die Kontur eines Sechskants auf. Alternativ kann die Vertiefung auch in dem Kopplungselement 8 und in dem weiteren Kopplungselement 13 vorgesehen sein und die Erhöhung kann an dem Antriebselement 11 vorgesehen sein. Die Kontur der Formschlusselemente 18, 19 kann alternativ auch in einer anderen Form beispielsweise fünfeckig oder oval sein, solange es möglich ist, damit ein Drehmoment zu übertragen.

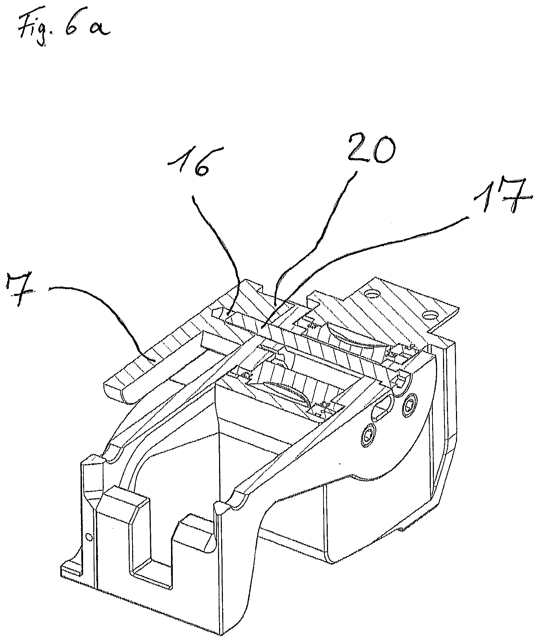

Der Abstandshalter 20 ist an der Befestigungsschiene 7 befestigt oder darin integriert. In Fig. 6a ist die Befestigungsschiene 7 mit einem integrierten Abstandshalter 20 gezeigt. Der Abstandshalter 20 ist hier mit der Aufnahme 16 für das oben beschriebene erste Befestigungselement 17 versehen.

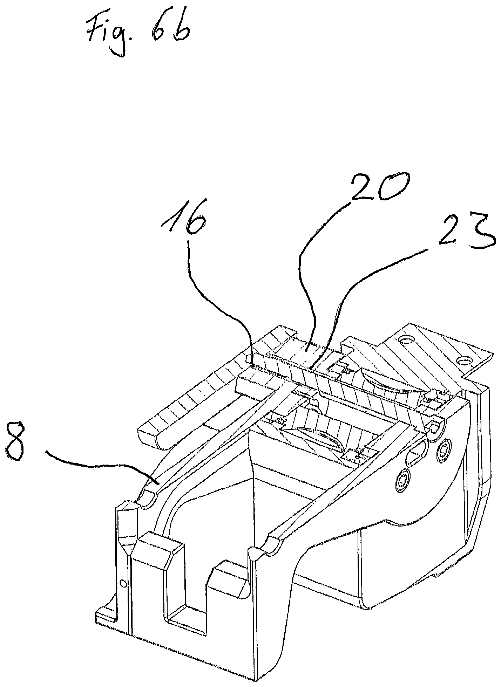

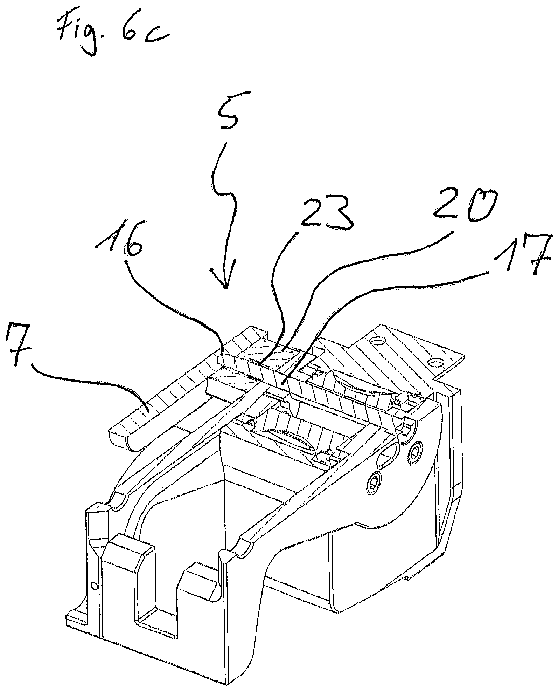

Alternativ kann der Abstandshalter 20 auch, wie in Fig. 6b gezeigt, an dem Kopplungselement 8 befestigt oder darin integriert sein. Der Abstandshalter ist in diesem Fall eine Erhöhung an dem Kopplungselement 8. Als eine weitere Alternative ist, wie in Fig. 6c gezeigt, der Abstandshalter 20 ein separates Bauteil. In diesen Fällen ist der Abstandshalter mit einer dritten durchgehenden Öffnung 23 für das Befestigungselement 17 versehen und die Befestigungsschiene 7 ist mit der Aufnahme 16 für das erste Befestigungselement 17 versehen, so dass die Befestigungsschiene 7 an dem Gelenk 5 befestigt werden kann.

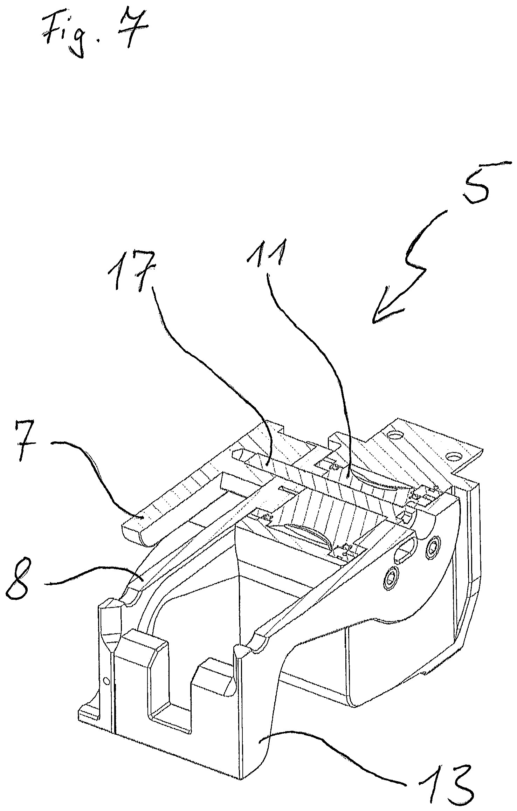

In Fig. 7 ist eine Schnittansicht des Gelenks 5 mit einer gegenüber Fig. 4 weiteren Ausgestaltung der Anbringung der Befestigungsschiene 7. In Fig. 7 verbindet das erste Befestigungselement 17 lediglich das Antriebselement 11 und das Kopplungselement 8 mit der Befestigungsschiene 7, wohingegen in Fig. 4 auch das zweite Kopplungsglied 13 durch das Befestigungselement 17 befestigt wird.

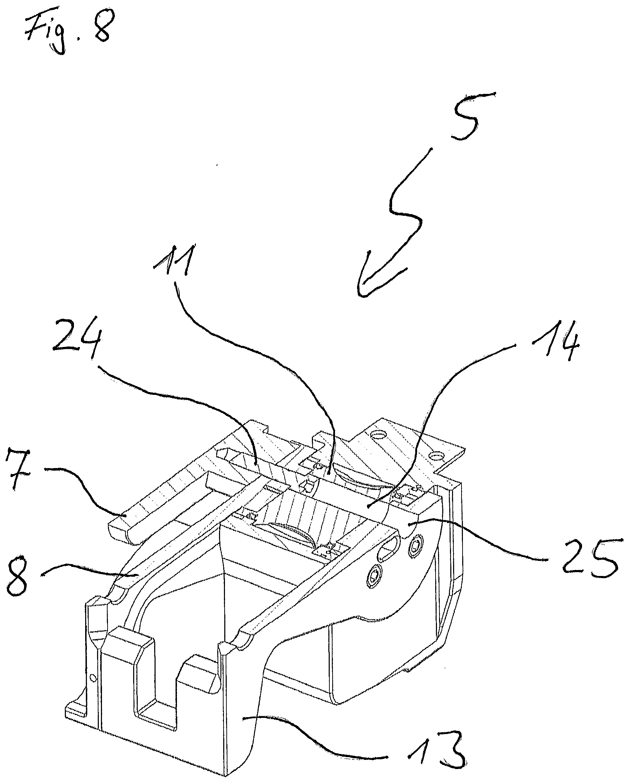

Fig. 8 zeigt eine andere weitere Ausgestaltung der Anbringung der Befestigungsschiene 7 an dem Gelenk 5. Die Befestigungsschiene 7 ist hier nicht, wie beispielsweise in Fig. 7, mittels des ersten Befestigungselements 17, mit dem das Antriebselement 11 und das Kopplungselement 8 mit der Befestigungsschiene 7 verbunden sind, befestigt, sondern mit einem zweiten lösbaren Befestigungselement 24, das lediglich das Kopplungselement 8 und die Befestigungsschiene 7 verbindet. Das zweite Befestigungselement 24 ist durch die durchgehende Öffnung 14 des Antriebselements 11 und durch eine weitere Öffnung 25 in dem zweiten Kopplungsglied 13 einführbar, wobei aber das zweite Kopplungsglied 13 nicht zwingend vorhanden ist. Sofern die Befestigungsschiene über das zweite Befestigungselement 24 verbunden ist, ist es nicht zwingend erforderlich, dass das Antriebselement 11 und das Kopplungselement 8 mittels eines lösbaren Verbindungselements verbunden sind.

## Patentansprüche

1. Patientenlagerungsplatte (2) bestehend aus mindestens einer ersten und einer zweiten Patientenlagerungskomponente (3, 4) und einem Zubehörteil (7), wobei
die erste oder die zweite Patientenlagerungskomponente (3, 4) mit einem Gelenk (5) mit einer Schwenkachse (6) versehen ist, und die Patientenlagerungskomponenten (3, 4) über das Gelenk (5) verschwenkbar koppelbar sind,
wobei das Gelenk (5) ein Antriebselement (11) für ein Verschwenken der Patientenlagerungskomponenten (3, 4) zueinander um die Schwenkachse (6), sowie
mindestens ein Kopplungselement (8) zur Kopplung der ersten an die zweite Patientenlagerungskomponente (3, 4) aufweist,
wobei das Antriebselement (11) und das Kopplungselement (8) in Richtung der Schwenkachse (6) aneinander anliegend verbunden sind, und das Zubehörteil (7) mittels eines durch das Antriebselement (11) und das Kopplungselement (8) hindurchgehenden ersten lösbaren Befestigungselements (17) oder mittels eines nur durch das Kopplungselement (8) hindurchgehenden zweiten lösbaren Befestigungselements (24) an dem Kopplungselement (8) befestigbar ist,
indem im Antriebselement (11) eine in der Richtung der Schwenkachse (6) verlaufende erste durchgehende Öffnung (14), und im Kopplungselement (8) eine zweite durchgehende Öffnung (15) für das erste oder zweite Befestigungselement (17, 24) sowie im Zubehörteil (7) eine zu der ersten und zweiten Öffnung (14, 15) fluchtende Aufnahme (16), vorgesehen sind, so dass
das mindestens eine erste oder zweite Befestigungselement (17, 24) von der dem Kopplungselement (8) gegenüberliegenden Seite des Antriebselements (11) aus in die erste Öffnung (14) einführbar ist und mit dem Zubehörteil (7) verbindbar ist.

2. Patientenlagerungsplatte (2) gemäß Anspruch 1,
wobei das Zubehörteil (7) als eine Befestigungsschiene ausgebildet ist.

3. Patientenlagerungsplatte (2) gemäß Anspruch 1 oder 2,
wobei das Zubehörteil (7) eine dem Antriebselement (11) abgewandte glatte, homogene Fläche aufweist.

4. Patientenlagerungsplatte (2) gemäß einem der Ansprüche 1 bis 3, wobei
zwischen dem Zubehörteil (7) und dem Kopplungselement (8) mindestens ein Abstandshalter (20) vorgesehen ist, der mit dem Zubehörteil (7) verbunden ist, und der die mindestens eine Aufnahme (16) für das mindestens eine erste oder zweite Befestigungselement (17, 24) für eine Verbindung des Abstandshalters (20) mit dem Kopplungselement (8) aufweist.

5. Patientenlagerungsplatte (2) gemäß einem der Ansprüche 1 bis 3, wobei
zwischen dem Zubehörteil (7) und dem Kopplungselement (8) mindestens ein Abstandshalter (20) vorgesehen ist, der mindestens eine dritte durchgehende Öffnung (23) für das mindestens eine erste oder zweite Befestigungselement (17, 24) aufweist, und das Zubehörteil (7) mindestens eine Aufnahme (16) für das mindestens eine Befestigungselement für eine Verbindung mit dem Kopplungselement (8) aufweist.

6. Patientenlagerungsplatte (2) gemäß Anspruch 5, wobei
der Abstandshalter (20) als eine Erhöhung des Kopplungselements (8) ausgebildet ist.

7. Patientenlagerungsplatte (2) gemäß Anspruch 5, wobei der Abstandshalter (20) als ein separates Bauteil ausgebildet ist.

8. Patientenlagerungsplatte (2) gemäß einem der vorangehenden Ansprüche, wobei
ein weiteres Kopplungselement (13), das in der Richtung der Schwenkachse (6) dem Kopplungselement (8) bezüglich des Antriebselements (11) gegenüberliegt und eine Öffnung (22) in der Richtung der Schwenkachse (6) zum Durchführen des ersten oder zweiten Befestigungselements (17, 24) aufweist, an dem Gelenk (5) vorgesehen ist.

9. Patientenlagerungsplatte (2) gemäß einem der vorangehenden Ansprüche, wobei an dem Antriebselement (11) und an dem Kopplungselement (8) und/oder an dem weiteren Kopplungselement (13) zusätzlich zu dem mindestens einen ersten Befestigungselement (17) Formschlusselemente (18, 19) vorgesehen sind, mittels derer ein Formschluss zwischen dem Kopplungselement (8) und/oder dem weiteren Kopplungselement (13) und dem Antriebselement (11) ausbildbar ist.

10. Patientenlagerungsplatte (2) gemäß Anspruch 9, wobei die Formschlusselemente (18, 19) in der Richtung der Schwenkachse (6) eine Erhöhung oder Vertiefung an dem Kopplungselement (8) und/oder dem weiteren Kopplungselement (13) aufweist und das Antriebselement (11) in der Richtung der Schwenkachse (6) eine komplementäre Vertiefung oder Erhöhung aufweist.

11. Patientenlagerungsplatte (2) gemäß Anspruch 10, wobei die Erhöhung und Vertiefung in der Richtung der Schwenkachse (6) jeweils eine Kontur einer komplementären Sechskantform aufweisen.

12. Patientenlagerungsplatte (2) gemäß einem der vorangehenden Ansprüche, wobei das Antriebselement (11) ein Schneckenrad ist.

13. Patientenlagerungsplatte gemäß Anspruch 12, wobei das Schneckenrad Bestandteil einer Antriebseinrichtung (10) mit einem Schneckengetriebe ist.

## Claims

1. Patient supporting plate (2) consisting of at least one first and one second patient supporting components (3, 4) and an accessory part (7), wherein
the first or the second patient supporting component (3, 4) is provided with a hinge (5) having a swivel axis (6), and the patient supporting components (3, 4) can be coupled via the hinge (5) in a swiveling manner,
wherein the hinge (5) has a drive element (11) for swiveling the patient supporting components (3, 4) with respect to each other around the swivel axis (6), and
at least one coupling element (8) for coupling the first to the second patient supporting component (3, 4),
wherein the drive element (11) and the coupling element (8) are connected juxtaposed in the direction of the swivel axis (6), and the accessory part (7) can be fastened to the coupling element (8) by means of a first detachable fastening element (17) passing through the drive element (11) and the coupling element (8) or by means of a second detachable fastening element (24) passing only through the coupling element (8),
by providing a first through opening (14) running in the direction of the swivel axis (6) in the drive element (11) and a second through opening (15) in the coupling element (8) for the first or second fastening element (17, 24) and also a receptacle (16) aligned with the first and second openings (14, 15) in the accessory part (7), so that
the at least one first or second fastening element (17, 24) can be inserted into the first opening (14) from the drive element (11) side located opposite to the coupling element (8) and can be connected to the accessory part (7).

2. Patient supporting plate (2) according to claim 1,
wherein the accessory part (7) is designed as a fastening rail.

3. Patient supporting plate (2) according to claim 1 or 2,
wherein the accessory part (7) has a smooth and homogeneous surface facing away from the drive element (11).

4. Patient supporting plate (2) according to anyone of claims 1 to 3, wherein
at least one spacer (20) being connected to the accessory part (7) and having the at least one receptacle (16) for the at least one first or second fastening element (17, 24) for connecting the spacer (20) to the coupling element (8) is provided between the accessory part (7) and the coupling element (8).

5. Patient supporting plate (2) according to anyone of claims 1 to 3, wherein
at least one spacer (20) having at least a third through opening (23) for the at least one first or second fastening element (17, 24) is provided between the accessory part (7) and the coupling element (8), and
the accessory part (7) comprises at least one receptacle (16) for the at least one fastening element for a connection to the coupling element (8).

6. Patient supporting plate (2) according to claim 5, wherein
the spacer (20) is formed as an elevation of the coupling element (8).

7. Patient supporting plate (2) according to claim 5, wherein
the spacer (20) is designed as a separate component.

8. Patient supporting plate (2) according to anyone of the preceding claims, wherein
a further coupling element (13) being located opposite to the coupling element (8) with respect to the drive element (11) in the direction of the swivel axis (6) and having an opening (22) in the direction of the swivel axis (6) for passing through the first or second fastening element (17, 24) is provided at the hinge (5).

9. Patient supporting plate (2) according to anyone of the preceding claims, wherein, in addition to the at least one first fastening element (17), form-fitting elements (18, 19) are provided at the drive element (11) and at the coupling element (8) and/or at the further coupling element (13), by means of which form-fitting elements a positive connection can be formed between the coupling element (8) and/or the further coupling element (13) and the drive element (11).

10. Patient supporting plate (2) according to claim 9, wherein the form-fitting elements (18, 19) comprise an elevation or indentation at the coupling element (8) and/or at the further coupling element (13) in the direction of the swivel axis (6), and the drive element (11) comprises a complementary indentation or elevation in the direction of the swivel axis (6).

11. Patient supporting plate (2) according to claim 10, wherein the elevation and indentation each have a contour of a complementary hexagonal shape in the direction of the swivel axis (6).

12. Patient supporting plate (2) according to anyone of the preceding claims, wherein the drive element (11) is a worm wheel.

13. Patient supporting plate (2) according to claim 12, wherein the worm wheel is a component of a drive device (10) having a worm gear.

## Revendications

1. Plateau de support (2) pour patients constitué d'au moins un premier et un deuxième composant de support de patient (3, 4), et d'une partie d'accessoire (7), plateau de support
dans lequel le premier ou le deuxième composant de support de patient (3, 4) est pourvu d'une articulation (5) avec un axe de pivotement (6), et les composants de support de patient (3, 4) peuvent être couplés de manière pivotante par l'intermédiaire de l'articulation (5),
dans lequel l'articulation (5) présente un élément d'entraînement (11) pour un pivotement des composants de support de patient (3, 4) l'un par rapport à l'autre autour de l'axe de pivotement (6),
ainsi qu'au moins un élément de couplage (8) pour assurer un couplage du premier au deuxième composant de support de patient (3, 4),
dans lequel l'élément d'entraînement (11) et l'élément de couplage (8) sont reliés en s'appuyant l'un contre l'autre dans la direction de l'axe de pivotement (6), et la pièce d'accessoire (7) peut être fixée à l'élément de couplage (8) au moyen d'un premier élément de fixation (17) démontable passant à travers l'élément d'entraînement (11) et l'élément de couplage (8), ou bien au moyen d'un deuxième élément de fixation (24) démontable ne passant qu'à travers l'élément de couplage (8),
grâce au fait que dans l'élément d'entraînement (11) il est prévu une première ouverture traversante (14) s'étendant dans la direction de l'axe de pivotement (6), et dans l'élément de couplage (8) il est prévu une deuxième ouverture traversante (15), pour le premier ou le deuxième élément de fixation (17, 24), et dans la pièce d'accessoire (7) il est prévu un logement d'accueil (16) aligné avec la première et la deuxième ouverture (14, 15), de sorte que
ledit au moins un premier ou deuxième élément de fixation (17, 24) peut être inséré dans la première ouverture (14), à partir du côté de l'élément d'entraînement (11) opposé à celui dirigé vers l'élément de couplage (8), et peut être relié à la pièce d'accessoire (7).

2. Plateau de support (2) pour patients selon la revendication 1,
dans lequel la pièce d'accessoire (7) est réalisée sous la forme d'un rail de fixation.

3. Plateau de support (2) pour patients selon la revendication 1 ou la revendication 2,
dans lequel la pièce d'accessoire (7) présente une surface lisse, homogène, opposée à celle dirigée vers l'élément d'entraînement (11).

4. Plateau de support (2) pour patients selon l'une des revendications 1 à 3,
dans lequel entre la pièce d'accessoire (7) et l'élément de couplage (8), il est prévu au moins une entretoise d'espacement (20), qui est reliée à la pièce d'accessoire (7), et qui comporte ledit au moins un logement d'accueil (16) pour ledit au moins un premier ou deuxième élément de fixation (17, 24) en vue d'assurer une liaison de l'entretoise d'espacement (20) avec l'élément de couplage (8).

5. Plateau de support (2) pour patients selon l'une des revendications 1 à 3,
dans lequel entre la pièce d'accessoire (7) et l'élément de couplage (8), il est prévu au moins une entretoise d'espacement (20), qui comporte au moins une troisième ouverture traversante (23) pour ledit au moins un premier ou deuxième élément de fixation (17, 24), et la pièce d'accessoire (7) présente au moins un logement d'accueil (16) pour ledit au moins un élément de fixation, en vue d'assurer une liaison avec l'élément de couplage (8).

6. Plateau de support (2) pour patients selon la revendication 5,
dans lequel l'entretoise d'espacement (20) est réalisée en tant que proéminence de l'élément de couplage (8).

7. Plateau de support (2) pour patients selon la revendication 5,
dans lequel l'entretoise d'espacement (20) est réalisée en tant que pièce séparée.

8. Plateau de support (2) pour patients selon l'une des revendications précédentes,
dans lequel il est prévu au niveau de l'articulation (5), un autre élément de couplage (13), qui, dans la direction de l'axe de pivotement (6), est opposé à l'élément de couplage (8) par rapport à l'élément d'entraînement (11), et comporte une ouverture (22) dans la direction de l'axe de pivotement (6) pour y faire passer le premier ou le deuxième élément de fixation (17, 24).

9. Plateau de support (2) pour patients selon l'une des revendications précédentes,
dans lequel sur l'élément d'entraînement (11) et sur l'élément de couplage (8) et/ou sur l'autre élément de couplage (13), sont prévus, en plus dudit au moins un premier élément de fixation (17), des éléments de liaison par complémentarité de formes (18, 19) au moyen desquels il est possible de réaliser une liaison par complémentarité de formes entre l'élément de couplage (8) et/ou l'autre élément de couplage (13) et l'élément d'entraînement (11).

10. Plateau de support (2) pour patients selon la revendication 9,
dans lequel les éléments de liaison par complémentarité de formes (18, 19) présentent, dans la direction de l'axe de pivotement (6), une proéminence ou un creux sur l'élément de couplage (8) et/ou l'autre élément de couplage (13), et l'élément d'entraînement (11) présente, dans la direction de l'axe de pivotement (6), un creux ou une proéminence complémentaire.

11. Plateau de support (2) pour patients selon la revendication 10,
dans lequel la proéminence et le creux dans la direction de l'axe de pivotement (6) présentent respectivement un contour d'une forme à six pans complémentaire.

12. Plateau de support (2) pour patients selon l'une des revendications précédentes,
dans lequel l'élément d'entraînement (11) est une roue de système à vis sans fin.

13. Plateau de support pour patients selon la revendication 12,
dans lequel la roue de système à vis sans fin fait partie d'un dispositif d'entraînement (10) comprenant une transmission à vis sans fin.
